(19) Europäisches Patentamt
European Patent Office
Office européen des brevets

(11) EP 0 611 813 B1

(12) **EUROPEAN PATENT SPECIFICATION**

(45) Date of publication and mention of the grant of the patent:
**30.12.1998 Bulletin 1998/53**

(51) Int Cl.$^6$: **C09J 4/00**

(21) Application number: **94301131.2**

(22) Date of filing: **16.02.1994**

(54) **One-component air-activatable polymerisable compositions containing onium salts**

Luftaktivierbare polymerisierbare Einkomponentenzusammensetzungen, die Oniumsalze enthalten

Compositions polymérisables activables par l'air et contenant des sels d'onium

(84) Designated Contracting States:
**AT BE CH DE DK ES FR GB GR IE IT LI LU MC NL PT SE**

(30) Priority: **18.02.1993 IR 930115**

(43) Date of publication of application:
**24.08.1994 Bulletin 1994/34**

(73) Proprietor: **LOCTITE (IRELAND) LIMITED**
**Dublin 24 (IE)**

(72) Inventor: **Kneafsey, Brendan**
**Lucan, Co. Dublin (IE)**

(74) Representative: **Marchant, James Ian et al**
**Elkington and Fife,**
**Prospect House,**
**8 Pembroke Road**
**Sevenoaks, Kent TN13 1XR (GB)**

(56) References cited:
**EP-A- 0 224 730**
**EP-A- 0 502 733**
**US-A- 2 578 910**
**US-A- 4 602 073**

Remarks:
The file contains technical information submitted after the application was filed and not included in this specification

EP 0 611 813 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to one-component polymerisable compositions and their use. The compositions are suitable for use as one-component systems for forming polymers, requiring no primers. The compositions are useful as adhesives, sealants, surface coatings, moulding resins and composite matrices, for example. These compositions are particularly suitable for use as thread-locking compounds, e.g. for cementing nuts to threaded shafts, and bushes to bush housings.

The cure of acrylic adhesives is initiated by a two-part redox system. The first part, the initiator, is normally present in the base component of the adhesive and the second part is present in the accelerator or curative component. One widely used curative is the reaction product of aniline and n-butyraldehyde. The reaction product was first known from US Patent No. 1780334 assigned to E.I. Du Pont DeNemours and Co. The condensation of aniline and n-butyraldehyde results in many products, some having complex structures. However it appears that the major component and active ingredient is a substituted dihydropyridine (DHP).

An adhesive composition which can be formulated either as a two-part system or as a system utilising a primer is disclosed in US Patent No. 3890407, assigned to E.I. Du Pont DeNemours and Co. The composition comprises a sulphur-bearing component selected from chlorosulphonated polyethylene and a mixture of sulphonyl chloride with chlorinated polyethylene in at least one polymerisable vinyl monomer and an accelerator comprising a primary amine-aldehyde condensation product. US Patent No. 4112013 also of E.I. Du Pont DeNemours and Co. which was divided from US Patent No. 3890407 specifies that the chlorosulphonated polyethylene is made from branched polyethylene having a melt index of about 100, the chlorosulphonated polyethylene containing 43% chlorine by weight and 34 mmoles of sulphonyl chloride per 100 grams of polymer and the composition may also comprise a mixture of methyl-methacrylate, glacial methacrylic acid and ethyleneglycol dimethacrylate. A further US Patent No. 4106971, also divided from Patent No. 3890407, relates to a method of bonding two surfaces comprising the above disclosed adhesive compositions.

United States Patent No. 4430480, assigned to Loctite Corporation relates to an adhesive composition which comprises a first part comprising a solution of chlorosulphonated polyethylene in at least one polymerisable vinyl monomer, a polymerisation catalyst which comprises at least one free-radical initiator and a second part comprising an activator composition which consists of at least 70% of the condensation reaction product formed between butyraldehyde and aniline.

An adhesive composition of this type, enriched in N-phenyl-3,5-diethyl-2-propyl-1,2-dihydropyridine to a concentration of at least about 70% by weight of the condensation reaction products is known from U.S. Patent No. 4,430,480.

U.S. Patent No. 4,602,073 assigned to National Starch & Chemical Corporation describes a two-part adhesive, the first part comprising a mixture of polymerisable optionally substituted acrylic monomers, a diazonium salt initiator and optionally a Lewis acid or salt as stabiliser and a second part comprising an aldehyde-amine condensation product as an activator to induce decomposition of the diazonium salt initiator in the first part.

EP-A-0 224 730 (corresponding to US Patent No 4,656,229 also assigned to National Starch & Chemical Corporation) describes a similar two-part anaerobic curing adhesive composition utilising a first part comprising a mixture of free radical polymerisable optionally substituted acrylic monomers and a diaryliodonium salt initiator and a second part comprising an aldehyde-amine condensation product as an activator.

Many of the above compositions based on aldehyde-amine condensation reaction products are, however, two-part systems and suffer from the disadvantages and limitations of use associated with such systems.

An adhesive composition which is described as being polymerisable either aerobically or anaerobically is disclosed in United States Patent No 4,348,503, and Patent No 4,429,088 divided therefrom, of Bachmann, and comprises an acrylic ester monomer capable of free-radical polymerisation and a monomeric polyacrylate ester prepolymer together with a catalyst system which comprises an aromatic perester free-radical precursor, an organic acid and a soluble compound of a transition metal cure accelerator. However this composition requires a separate activator such as an amine-aldehyde condensate.

United States Patent No 4,452,955, assigned to Minnesota Mining and Manufacturing Company, discloses an adhesive composition comprising a polymerisable monomer having at least one alpha, beta-unsaturated carboxyl functionality and as an accelerator an organic sulphimide or perfluoralkysuphonanilide, together with an inhibitor of free-radical polymerisation to retard polymerisation of the unsaturated carboxyl functionality on contact with the accelerator and a condensation reaction product of an aldehyde and a primary or secondary amine.

Free radical polymerisable compositions are disclosed in European Patent Specification No 0 356 875 of Henkel KGA. These comprise ethylenically unsaturated, polymerisable compounds together with an activator system which can be initiated by oxygen and water, comprising an N-alkyl-substituted tert-arylamine with at least one aliphatic CH bond in the alpha position, a metal compound generally used for accelerating the drying of unsaturated oil and which is at least partially soluble in the composition, and a compound of a weakly acidic carboxylic acid having a pKa value of no less than about 0.9, which can be hydrolyzed to a free carboxylic acid on contact with moisture.

The N-alkyl-substituted <u>tert</u>.-arylamines correspond in particular to the general formula:-

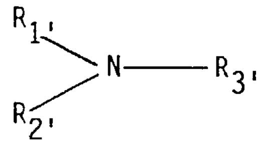

in which $R_1$, is an optionally substituted aryl radical, more especially an optionally alkyl-substituted phenyl radical, $R_2$, has the same meaning as $R_1$, or is an optionally substituted, linear or branched alkyl radical and $R_3$, is a linear or branched alkyl radical which may be substituted, but contains at least one hydrogen atom in the alpha-position to the nitrogen. These compositions depend on the action of both water and oxygen to effect a cure reaction. As such their formulations are very dependant on humidity conditions.

W091/10687-A of Henkel KGaA discloses air-activatable adhesive compositions comprising mixtures of free-radically polymerisable unsaturated olefinic compounds, and hydrazone compounds prepared and stored under anaerobic conditions. The hydrazones may be alkyl, cycloalkyl and/or aryl hydrazone(s) of aldehyde(s) and/or ketone(s) and are claimed to react with air to form hydroperoxides useful as polymerisation initiators. The one component compositions are stable in the absence of air.

EP-A-0 502 733 of Loctite (Ireland) Limited describes a one-part air-activatable polymerisable composition comprising:-

(a) at least one free-radically polymerisable monomer, and

(b) an activator system for effective polymerisation of the free-radically polymerisable monomer, said activator system comprising at least one auto-oxidisable compound of a formula which includes the structure I:-

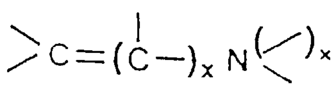

I

where x is 0 or 1, and where the lines representing unfilled valencies indicate bonds to carbon, hydrogen or hetero atoms, alone or in combination with a weak acid;
with the proviso that:
when x = 0, the nitrogen atom in structure I is not bonded to a second nitrogen atom;
and when x = 1 there is a structure I in the compound in which the >C = C< moiety does not form part of a phenyl ring;

with the proviso that the composition does not contain a peroxide, or a peroxide precursor which produces peroxide in the absence of air or any ingredient which is a significant source of radicals in the absence of air.

Preferred auto-oxidisable compounds are selected from the group consisting of partially hydrogenated pyridines, condensation products of cyclic ketones and ureas, Schiff's bases, indoles, pyrroles, imidazoles, piperazines, carbazoles, tetrahydroquinolines, and substituted derivatives thereof, particularly dihydropyridines.

The presence of a weak acid is generally preferred in order to achieve a satisfactory rate of auto-oxidation for the partially hydrogenated pyridines. The majority of the working examples using dihydropyridines in EP-A-0 502 733 have acrylic acid in the formulation. Other acids used are methacrylic acid, trichloroacetic acid, cyanoacetic acid, salicylic acid, benzoic acid, acetic acid and saccharin.

The composition may also contain a soluble ionic salt, particularly a cobalt or iron salt.

The compositions as described in EP-A-0 502 733 are stable on storage in the absence of air, are activated by exposure to air, and will then cure in either the presence or absence of air. However the use of volatile acids, particularly acrylic acid, may give rise to odour problems in a working environment.

DD 287 796 A6 describes a spectrally sensitised photo polymerisable material useful in systems for data recording and for producing printing plates, printed circuits, photocurable adhesives and surface coatings. The material has high sensitivity to near UV and short wavelength visible light in the 310-420nm range. The material has an initiator system comprising certain light-absorbing 1,4-dihydropyridines having electron-withdrawing substituents (ester, acid, ketone, amide or nitrile groups) at the 3- and 5-positions, and one of a range of onium salts which include iodonium and sulfonium salts. It is known that electron-withdrawing substituents capable of resonance interaction in the 3-and 5-positions stabilize 1,4-dihydropyridines by extending the conjugation ("THE CHEMISTRY OF DIHYDROPYRIDINES" by

Ulli Eisner and Josef Kuthan in Chemical Reviews, Vol 72, No 1, 1972, pages 1-42 at page 3). Such stabilized 1,4-dihydropyridines would not be reactive with oxygen and it is noteworthy that the specification makes no reference to any involvement of air in the initiation of polymerisation. Therefore DD 287,796 A6 contains no teaching about air-activable compositions but depends upon the stability and light-absorbing characteristics of the particular 1,4-dihydropyridines disclosed therein.

It is the object of the present invention to provide a one component substrate-insensitive polymerisable composition which is stable on storage in the absence of air, which is activated by exposure to air (without requiring photo-activation) and which then cures in either the presence or absence of air, but which does not require the presence of a weak acid for satisfactory auto-oxidation performance.

It is an object of this invention to provide an air-activable composition which does not require photo initiation.

According to the present invention there is provided a one component polymerisable composition which has been produced under anaerobic conditions and is storage stable under anaerobic conditions but which polymerises on exposure to air whether or not the presence of air is maintained, said composition comprising:

(a) at least one free-radically polymerisable monomer; and

(b) an activator system for effecting polymerisation of the free-radically polymerisable monomer, said activator system comprising:

(i) an auto-oxidisable compound which is a dihydropyridine having a general formula selected from II(i)-(v):

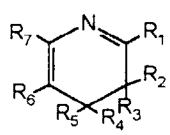
II(i)

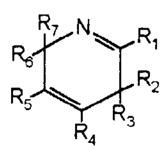
II(ii)

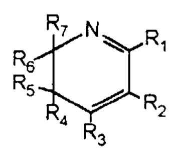
II(iii)

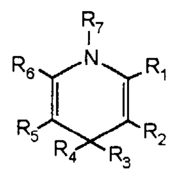
II(iv)

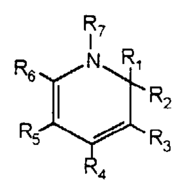
II(v)

where $R_1$ to $R_7$, which may be the same or different, are each hydrogen or a group selected from hydrocarbyl, heterohydrocarbyl, silyl, and substituted derivatives of any of the foregoing, or any two of the groups $R_1$ to $R_7$ may together form a mono- or polycyclic ring structure, which may be a fused ring structure, which in turn may be substituted, provided that none of the groups $R_1$ to $R_7$ is a group which interferes with polymerisation, and that, in the case of 1,4-dihydropyridines of formula II(iv), the groups $R_2$ and $R_5$ at the 3- and 5- positions are not both electron-withdrawing groups;

(ii) an onium salt selected from diazonium, iodonium or sulfonium salts which do not interfere with polymerisation; and

(iii)a soluble ionic salt,

wherein "heterohydrocarbyl" is a hydrocarbyl group interrupted by one or more oxygen, nitrogen or sulfur atoms, and "substituted derivative" is a hydrocarbyl, heterohydrocarbyl or silyl group substituted with one or more oxygen, nitrogen, sulfur or halogen atoms; and

provided that the composition does not contain a peroxide, or a peroxide precursor which produces peroxide in the absence of air, or any ingredient which is a significant source of radicals in the absence of air.

For the auto-oxidisable compound (I) , 1,4-dihydropyridines of formula II (iv) and 1,2-dihydropyridines of formula II (v) are preferred, the 1,2-dihydropyridines being most preferred. $R_7$ in the compounds of formula II (iv) or II (v) is preferably other than hydrogen, and more-preferably is an electrondonating group. In the case of 1,4-dihydropyridines of formula II (iv) the groups $R_2$ and $R_5$ at the 3- and 5-positions must not both be electron-withdrawing groups such as ester, acid, ketone, amide or nitrile groups because such substituents would render the 1,4-dihydropyridines stable to air oxidation. Other 1,4-dihyrdropyridines including the parent 1,4-dihydropyridine react rapidly in air (N C Cook and E J Lyons, J. Amer. Chem. Soc. 87, 3238 (1965)).

The term "hydrocarbyl" as used herein includes

(i) straight chain or branched linear or alicyclic aliphatic groups including alkyl, alkenyl and alkynyl, preferably containing from 1 to 20, more preferably from 1 to 10, most preferably from 1 to 5 carbon atoms; and alkylene and alkenylene groups forming part of a ring structure which preferably contains from 3 to 30, more preferably 5 to 20

carbon atoms;

(ii) aromatic groups including aryl, alkaryl and aralkyl (groups, preferably containing 6 to 20 carbon atoms, more preferably 6 to 10 carbon atoms, and optionally having a fused ring structure.

The term "substituted" or "substituted derivative" includes the group substituted with one or more oxygen, nitrogen, sulphur or halogen atoms or atom-containing moieties, or with one or more hydrocarbyl, heterohydrocarbyl or silyl groups, which in turn may be substituted with one or more oxygen, nitrogen, sulphur or halogen atoms or atom-containing moieties.

Preferably $R_1$ to $R_7$ and/or the substituents on the ring formed by any two of the $R_1$ to $R_7$ groups are hydrogen or methyl, ethyl, propyl, butyl, phenyl, benzyl, amide or trimethyl silyl groups. Halogen may be chlorine, bromine, fluorine or iodine.

Preferably the onium salt (ii) is selected from:

a stabilised or unstabilised diazonium salt corresponding to the general formula III:

$$[Ar\ N = N^{+}]_{a}\ X^{(-)a}$$

wherein a is an integer of 1, 2 or 3 taken so as to equalise the valence charge of the salt and Ar is an aryl or substituted aryl radical (including diazonium-substituted aryl radicals), and X is an anion;

or an iodonium salt corresponding to the general formula IV:

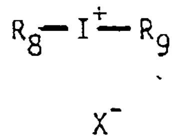

wherein $R_8$ and $R_9$, which may be the same or different, are selected from aryl or substituted aryl groups, and $X^-$ is a monovalent anion,

or a sulphonium salt corresponding to the general formula V:

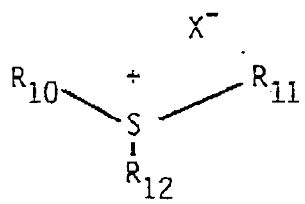

wherein $R_{10}$, $R_{11}$ and $R_{12}$ which may be the same or different are selected from aryl or substituted aryl groups (including fused ring substituted aryl radicals) and X is a monovalent anion.

Substituted aryl radicals or groups may for example, be substituted with alkyl, alkoxy, alkenyl, cycloalkyl, cycloalkenyl, aryl, chloro, fluoro, bromo, iodo, and nitro groups. In the case of sulphonium salts the aryl radical or group may be substituted with a thio phenoxy group.

The groups alkyl, alkoxy, alkenyl, cycloalkyl, cycloalkenyl preferably contain from 1 to 20, more preferably from 1 to 10, most preferably from 1 to 5 carbon atoms and the aryl groups preferably contain from 6 to 20 and more preferably 6 to 10 carbon atoms.

In the diazonium salts of formula III, X is preferably an anion such as is ordinarily found in known diazonium salts and is taken so as to act as a counterion to the aryl diazonium cation moiety of the salt. X is most suitably selected from those described in US 4,602,073, and includes, for example $F^-$, $Cl^-$ , $Br^-$, $BF^-_4$, $SbF^-_6$, $PF^-_6$ and $AsF^-_6$.

In the iodonium salts of formula IV and the sulphonium salts of formula V, $X^-$ is a monovalent anion, for example

$F^-$, $Cl^-$, $Br^-$, $BF_4^-$, $SbF_6^-$, $PF_6^-$ or $AsF_6^-$.

Preferred soluble ionic salts (iii) are metal salts of the type generally used in oil drying technology. The metals should have several valency states and suitable metal salts are those of multivalent metals, especially transition metals. The metal ions are preferably present in their low valency state. The metal salt must be at least partially soluble in the composition, and may be present in the composition in an effective amount which is generally in a range of from 0.0001 to 0.1% by weight (1 to 1,000 parts per million), preferably (30 to 200 ppm).

The choice of metal may have a velocity determining effect on initiation of polymerisation because of a temperature dependence of the metal component in the process. Iron, cobalt, manganese and vanadium are highly active at room temperature. In addition, compounds of these metals can be mixed with one or more other metallic components such as lead, cerium, copper, calcium, barium, zinc and/or zirconium.

Metal naphthenates or metal acetyl acetonates are generally soluble in the composition, but other salts or organometallics may be used if they are sufficiently soluble.

The free-radically polymerisable monomer (a) may be selected from olefinically unsaturated systems such as acrylates, methacrylates, styrene, maleate esters, fumarate esters, unsaturated polyester resins, alkyd resins, thiol-ene compositions, and acrylate, methacrylate, or vinyl terminated resins including silicones and urethanes. Suitable acrylates and methacrylates are those used in polymerisable systems such as disclosed in U.S. Patent 4963220 of Bachmann et. al., and U.S. Patent 4215209 of Ray-Chaudhuri et al. Particularly preferred are hydroxyl-containing methacrylates especially hydroxylalkyl methacrylates such as hydroxypropyl methacrylate. Also preferred are methylmethacrylate, polyfunctional methylacrylates, silicone diacrylates and polyfunctional acrylated urethanes of the type known to be useful in formulating adhesives (e.g. as disclosed in U.S. Patent 4092376 of Douek et al) or a thiol-ene (e.g. as disclosed in U.S. Patent 3661744, 3898349, 4008341 or 4808638).

The autoxidisable compound (i) may be any dihydropyridine capable of reacting with atmospheric oxygen within the formulation, preferably by a free radical mechanism, for example as described herein or in EP 0,502,733A.

The following are examples of compounds which are suitable for use in the composition of the invention as autoxidisable compounds.

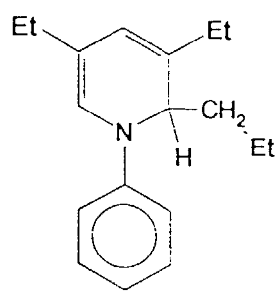

VI

N-phenyl-2-propyl-3,5-diethyl-1,2-dihydropyridine

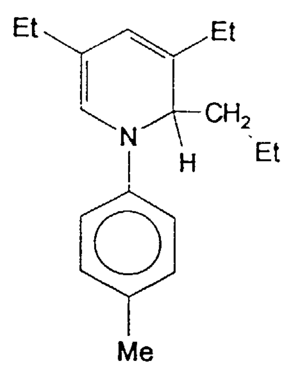

VII

N-(4-methylphenyl)-2-propyl-3,5-diethyl-1,2-dihydropyridine

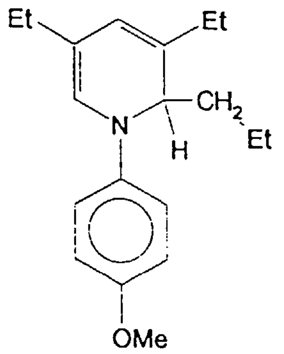

VIII

N-(4-methoxyphenyl)-2-propyl-3,5-diethyl-1,2-dihydropyridine

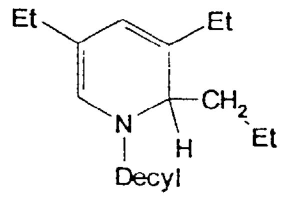

IX

N-decyl-2-propyl-3,5-diethyl-1,2-dihydropyridine

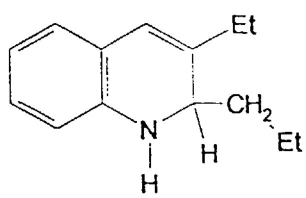

XII

2-propyl-3-ethyl-1,2-dihydroquinoline

The auto-oxidisable compound will generally be present in an amount to polymerise the composition upon exposure to atmospheric oxygen. Such an amount is generally within the range of from 0.1 to 20%, preferably from 0.1 to 10%, more preferably from 0.5 to 5%, based on the weight of the polymerisable composition.

The onium salt may be selected from either diazonium, iodonium or sulphonium salts or a combination thereof. The choice of onium salt used depends to a large extent on the autoxidisable compound being used. Suitable onium salts may be selected from those known as cationic photoinitiators for cationically polymerisable monomers and resins.

Typical examples of suitable oniums salts are selected from diaryl iodonium, triarylsulphonium and aryldiazonium salts. The following are examples of compounds which are suitable for use in the present composition:

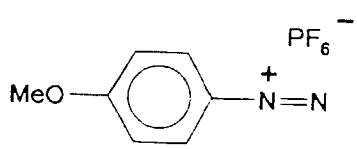

XIII

4-methoxybenzenediazonium hexafluorophosphate

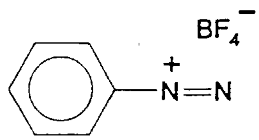

XIV

benzenediazonium tetrafluoroborate

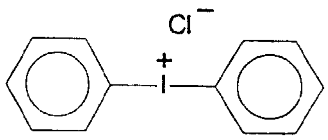

XV

diphenyl iodonium chloride

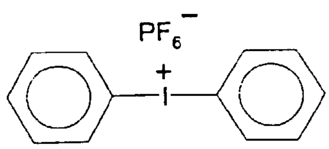

XVI

diphenyl iodonium hexafluorophosphate

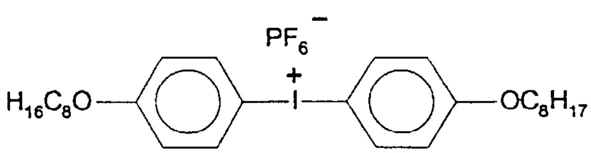

XVII

4,4'-dioctyloxydiphenyl iodonium hexafluorophosphate

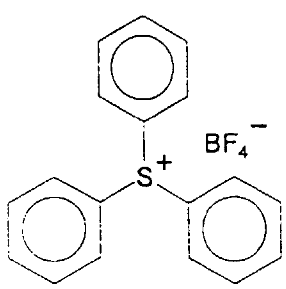

XVIII

triphenylsulphonium tetrafluoroborate

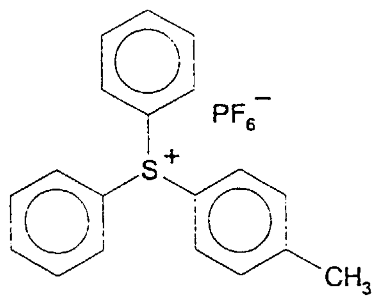

XIX

diphenyl tolylsulphonium hexafluorophosphate

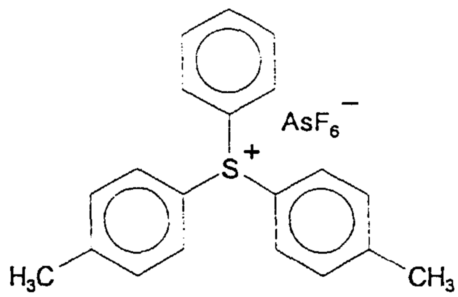

XX

phenylditolyl sulphonium hexafluoroarsenate

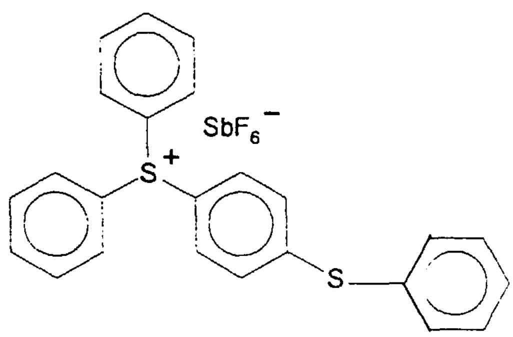

XXI

diphenyl-thiophenoxyphenyl sulphonium hexafluoroantimonate

The composition may optionally further comprise reducing agents, thickeners, fillers, pigments and free radical polymerisation stabilisers.

For commercial compositions, the presence of fillers and/or thickeners is preferred. Filled and/or thickened compositions usually will not be photo-polymerisable.

Suitable reducing agents are acetylphenylhydrazine, tetramethylthiourea or thiocaprolactam.

Polymeric thickeners may be present in the compositions in a minor amount, up to 50%, and may be thickeners such as a polymer or prepolymer of low or high molecular weight. Suitable polymeric thickeners are a commercially available methacrylate polymer sold by E.I. du Pont de Nemours and Company, under the trademark Elvacite or by Rhom and Haas under the Trade Mark Ryloid, as well as styrene-methyl methacrylate co-polymers and polybisphenol A maleate (sold by ICI Americas Inc. under the trademark Atlac). It is also possible to add inert filling materials such as finely divided silica, fumed silica (treated or untreated), montmorillonite, clay, and bentonite. The use of micronized silica would result in a paste-like thixotropic composition.

Additionally, it is conventional to include in adhesive formulations certain "inert" fillers such as wood flour, glass fibres, cotton linters, mica, alumina, and silica to modify viscosity, improve impact resistance and for other purposes. Such fillers could be incorporated in the formulations of the present invention. Small percentages of silane monomers could also be added to increase moisture resistance, as well as to enhance bonding of an adhesive to glass and similar surfaces. Other substances such as dyes, fire retarders, stabilizers such as quinones and hydroquinones, thixotropes,

plasticizers, and antioxidants, may also be included, although such additives may often be furnished in the principal ingredients, making their separate introduction unnecessary.

Peroxides, or peroxide percursors which produce peroxide in the absence of air, or any ingredient which is a significant source of radicals in the absence of air, should not be included in the compositions, so that polymerisation of the free-radically polymerisable monomer does not commence until it is exposed to oxygen.

The compositions of the present invention may suitably comprise 0.1 to 20% by weight of the auto-oxidisable compound, 0.1% to 20% by weight of the onium salt and at least 10% by weight of the free-radically polymerisable monomer, the remainder being the ionic salt, thickeners, fillers, pigments, reducing agents and/or stabilisers, the total constituents adding up to 100%. In the case of compositions containing fillers or thickeners the content of free-radically polymerisable monomers may suitably be up to 60% by weight.

The invention also provides a method of bonding two substrates comprising coating at least one substrate to be bonded with a composition as defined above, exposing the composition to oxygen for sufficient time to activate polymerization, and bringing the two substrates together. Typically at least 5 seconds, but preferably at least 30 seconds exposure to air would be suitable.

Furthermore the invention provides a method of forming a polymer, for example in topical coatings, encapsulation, and moulding, comprising exposing to oxygen for sufficient time to activate polymerization a composition as defined above. Typically at least 5 seconds, but preferably at least 30 seconds exposure to air would be suitable.

The above-described compositions are stable when prepared in the absence of air. Exposure to air results in the polymerisation of the composition, the polymerisation being sustained in the presence or absence of air once the initial exposure to air has taken place. Typically the exposure to air should be for at least 5 seconds, preferably not less than 30 seconds, more preferably 1 to 5 minutes.

The compositions do not require exposure to light in the 310-420nm range.

The compositions of the invention are true one-component polymerizable compositions and are thus much simpler to use than two-component compositions, and yet they have good stability when formulated under oxygen-free conditions and stored in a sealed container under inert gas. Their mechanism of polymerization is independent of the substrate and does not require photo-initiation and they thus have a wide range of applications. In addition it is possible to achieve a uniform distribution of cure in a thick bond line. Additionally, the compositions have rapid fixture times and good bond strengths. Furthermore they do not utilise weak acids of a volatile nature. It is surprising that an onium salt which is a neutral salt and a salt of strong acid can take the place of a weak acid in the activator system of an air-activatable composition.

The invention may be more fully understood with reference to the following examples.

Example 1

An adhesive composition was prepared by formulating hydroxypropyl methacrylate (10g), a commercially available sulphonium salt, GE UVE 1014 (a proprietary arylsulphonium salt formulation supplied by General Electric) (0.5g) and 0.5g of a cobalt naphthenate solution comprising 20 parts methyl methacrylate and one part of a 6% solution of cobalt naphthenate in hydrocarbon oil. This formulation was added to an aluminium tube (approximately 25 mls capacity) and exposed to a steady stream of argon gas through a syringe needle for a two minute period for the purpose of removing the dissolved oxygen. N-phenyl-2-propyl-3,5-diethyl-1,2-dihydropyridine(0.5g) was added to the formulation under the argon atmosphere. Following a further period of bubbling with argon of approximately 30 seconds the aluminium tube was sealed by crimping, thus trapping an argon gas in the head space above the formulation. The aluminium tube was shaken for 10-20 seconds to ensure thorough mixing of the formulation components.

The adhesive was tested as follows: samples of the adhesive were squeezed from the aluminium tube and spread onto grit blasted mild steel laps 10.16 x 2.54 cm (4 x 1 inches) to form a film of approximately 0.1mm in depth and exposed to air for a measured interval (hereafter referred to as the open time). The laps were then brought together to form an adhesive joint with 1.27 cm (0.5 inch) overlap. As a result of activation by exposure to air rapid fixturing was observed. The adhesive bonds assmebled as above were allowed to cure fully at room temperature and tested after a 24 hour period according to ASTM 603. The bond strengths data obtained for a range of open times with this adhesive are presented in Table 1 below:

Table 1

| Open Times/minutes | Tensile Shear Strengths N/mm$^2$ |
|---|---|
| 4 | 1.8 |
| 6 | 9.4 |
| 10 | 13.8 |

Example 2

A series of adhesive compositions 2 (a - d) were prepared using the procedure described in Example 1, containing the following components:

| Example No. | 2a | 2b | 2c | 2d |
|---|---|---|---|---|
| HPMA | 8.9g | 8.75g | 8.5g | 8.0g |
| 0.1% ferric (acetylacetonate)$_3$ in HPMA | 0.5g | 0.5g | 0.5g | 0.5g |
| N-phenyl-2-propyl-3,5-diethyl-1,2-dihydropyridine | 0.5g | 0.5g | 0.5g | 0.5g |
| diphenyl iodonium hexafluorophosphate | 0.1g | 0.25g | 0.5g | 1.0g |
| (HPMA is hydroxypropyl methacrylate) | | | | |

The adhesive performance of the formulations following activation by exposure to air was tested as outlined in Example 1 and the results are presented in Table 2 which also includes 3Kg fixture times i.e. the minimum times following assembly for bonds to support a 3Kg weight as determined according to (ASTM 603).

Table 2

| Iodonium salt conc. | Open Times/minutes | Tensile Shear Strength N/mm$^2$ | 3Kg Fixture Times/minutes |
|---|---|---|---|
| (a) 1% | 2 | 8.0 | 14 |
| | 4 | 4.0 | 13 |
| | 10 | 2.6 | 11 |
| (b) 2.5% | 2 | 10.1 | 11 |
| | 4 | 3.1 | 10.5 |
| | 10 | 12 | 8 |
| (c) 5% | 2 | 7.7 | |
| | 4 | 3.1 | |
| | 10 | 3.0 | |
| (d) 10% | 2 | 15.2 | |
| | 4 | 14.9 | |
| | 10 | 12.2 | |

Example 3a

An adhesive composition comprising hydroxypropyl methacrylate (8.5g), a solution of hydroxypropyl methacrylate containing 0.1% ferric (acetylacetonate)$_3$ (1.0g), N-phenyl-2-propyl-3,5-diethyl-1,2-dihydropyridine (0.5g) and diphenyl iodonium chloride (0.5g) was prepared using the procedure described in Example 1. The adhesive performance of the formulation was tested as outlined in Example 1 and is presented in Table 3a.

Table 3a

| Iodonium salt conc. | Open Times/minutes | Tensile Shear Strength N/mm$^2$ | 3Kg Fixture Times/minutes |
|---|---|---|---|
| 5% | 2 | 2.2 | 15 |
| | 4 | 8.9 | 11.5 |
| | 10 | 9.9 | 12 |

Example 3b

An adhesive composition was prepared using the procedure described in Example 1 by formulating hydroxypropyl methacrylate (7.8g), a solution of hydroxypropyl methacrylate containing 0.1% ferric (acetylacetonate)$_3$ (1.5g), N-phenyl-2-propyl-3,5-diethyl-1,2-dihydropyridine (0.5g) and diphenyl iodonium chloride (0.2g). The adhesive performance of the formulation was tested as outlined in Example 1 and is presented in Table 3b.

Table 3b

| Iodonium salt conc. | Open Times/minutes | Tensile Shear Strength N/mm$^2$ | 3Kg Fixture Times/minutes |
|---|---|---|---|
| 2% | 2 | 10.7 | 18 |
| | 4 | 13.2 | 10 |

Example 4

A series of adhesive compositions 4 (a - b) were prepared using the procedure described in Example 1 by formulating hydroxypropyl methacrylate, a solution of hydroxypropyl methacrylate containing 0.1% ferric (acetylacetonate)$_3$, N-phenyl-2-propyl-3,5-diethyl-1,2-dihydropyridine and 4,4'dioctyloxydiphenyl iodonium hexafluorophosphate (II) at the concentrations outlined below.

| Example No. | 4a | 4b | 4c | 4d |
|---|---|---|---|---|
| HPMA | 8.9g | 8.75g | 8.5g | 8.0g |
| 0.1% ferric (acetylacetonate)$_3$ in HPMA | 0.5g | 0.5g | 0.5g | 0.5g |
| N-phenyl-2-propyl-3,5-diethyl-1,2-dihydropyridine | 0.5g | 0.5g | 0.5g | 0.5g |
| 4,4'dioctyloxydiphenyl iodonium hexafluorophosphate | 0.1g | 0.25g | 0.5g | 1.0g |

The adhesive performance of the formulations following activation by exposure to air was tested as outlined in Example 1 and the results are presented in Table 4 which also includes 3Kg fixture times data.

Table 4

| Example No. | Open Times/minutes | Tensile Shear Strength N/mm$^2$ | 3Kg Fixture Times/minutes |
|---|---|---|---|
| (a) | 2 | 3.6 | 17 |
| | 4 | 4.9 | 14.5 |
| | 6 | 6.1 | 12 |
| (b) | 2 | 5.9 | 10 |
| | 4 | 6.9 | 9.75 |
| | 10 | 7.0 | 12.0 |
| (c) | 2 | 4.5 | 10.5 |
| | 4 | 6.7 | 10 |
| | 10 | 2.7 | 7 |
| (d) | 2 | 2.2 | 8.5 |
| | 4 | 2.6 | 7.5 |
| | 6 | 0.9 | 7 |

Example 5

An adhesive formulation was prepared using the procedure described in Example 1 by formulating hydroxypropyl methacrylate (10.0g), N-phenyl-2-propyl-3,5-diethyl-1,2-dihydropyridine (0.5g) and 0.5g of a cobalt naphthenate solution comprising 20 parts methyl methacrylate and one part of a 6% solution of cobalt naphthenate in hydrocarbon oil and a proprietary benzene diazonium salt formulation supplied by Asahi Denka, Tokyo under the designation P-33, (0.5g). The adhesive performance of this formulation was determined as per Example 1 and is presented below.

Table 5

| Open Times/minutes | Tensile Shear Strengths N/mm$^2$ |
|---|---|
| 2 | 1.5 |
| 4 | 6.2 |

Example 6

An adhesive composition was prepared using the procedure described in Example 1 by formulating hydroxypropyl

methacrylate (10.0g), N-phenyl-2-propyl-3,5-diethyl-1,2-dihydropyridine (0.5g) and 1.0g of a cobalt naphthenate solution comprising 20 parts methyl methacrylate and one part of a 6% solution of cobalt naphthenate in hydrocarbon oil and the proprietary benzene diazonium salt formulation supplied by Asahi Denka, Tokyo under the designation P-33, (0.5g). The adhesive performance of this formulation was determined as per Example 1 and is presented below.

Table 6

| Open Times/minutes | Tensile Shear Strengths N/mm$^2$ |
|---|---|
| 2 | 1.9 |
| 4 | 1.4 |
| 6 | 3.2 |
| 10 | 4.6 |

Example 7

An adhesive formulation was prepared using the procedure described in Example 1 by formulating hydroxypropyl methacrylate (10.0g), N-phenyl-2-propyl-3,5-diethyl-1,2-dihydropyridine (0.5g) and 0.5g of an iron (III) naphthenate solution comprising 20 parts methyl methacrylate and one part of a 6% solution of cobalt naphthenate in hydrocarbon oil and the proprietary benzene diazonium salt formulation supplied by Asahi Denka, Tokyo under the designation P-33, (0.5g). The adhesive performance of this formulation was determined as per Example 1 and is presented below.

Table 7

| Open Times/minutes | Tensile Shear Strengths N/mm$^2$ |
|---|---|
| 2 | 1.6 |
| 4 | 3.0 |
| 6 | 5.1 |
| 10 | 10.3 |

Example 8a

An adhesive formulation comprising hydroxypropyl methacrylate (7.7g), a solution of hydroxypropyl methacrylate containing 0.1% ferric (acetylacetonate)$_3$ (1.5g,) N-decyl-2-propyl-3,5-diethyl-1,2-dihydropyridine (0.5g) and diphenyl iodonium chloride (0.3g) was prepared using the procedure described in Example 1. The adhesive performance of the formulation was tested by activation in air as outlined in Example 1 and is presented in Table 8a.

Table 8a

| Iodonium salt conc. | Open Times/minutes | Tensile Shear Strength N/mm$^2$ |
|---|---|---|
| 3% | 2 | 5.6 |
| | 4 | 14.4 |

Example 8a

An adhesive formulation was prepared using the procedure described in Example 1 by formulating hydroxypropyl methacrylate (7.2g), a solution of hydroxypropyl methacrylate containing 0.1% ferric (acetylacetonate)3 (2.0g), N-decyl-2-propyl-3,5-diethyl-1,2-dihydropyridine (0.5g) and diphenyl iodonium chloride (0.3g). The adhesive performance of the formulation was tested as outlined in Example 1 and is presented in Table 8b.

Table 8b

| Iodonium salt conc. | Open Times/minutes | Tensile Shear Strength N/mm$^2$ |
|---|---|---|
| 3% | 2 | 10.8 |
| | 4 | 11.6 |

Example 9

A series of adhesive compositions 9 (a - c) were prepared using the procedure described in Example 1 by formulating hydroxypropyl methacrylate, a solution of hydroxypropyl methacrylate containing 0.1% ferric (acetylacetonate) 3, N-phenyl-2-propyl-3,5-diethyl-1,2-dihydropyridine and di-4,4'-octyloxyphenyl iodonium hexafluorophosphate at the following concentrations.

| Example No. | 9a | 9b | 9c |
|---|---|---|---|
| HPMA | 7.5g | 8.25g | 8.4g |
| 0.1% ferric (acetylacetonate)$_3$ in HPMA | 1.0g | 0.25g | 0.1g |
| N-phenyl-2-propyl-3,5-diethyl-1,2-dihydropyridine | 0.5g | 0.5g | 0.5g |
| di-4,4'-octyloxyphenyl iodonium hexafluorophosphate | 1.0g | 1.0g | 1.0g |

The adhesive performance of the formulations was tested by activation in air as outlined in the previous examples.

Table 9

| Formulation No. | Open Times/minutes | Tensile Shear Strength N/mm$^2$ | 3Kg Fixture Times/minutes |
|---|---|---|---|
| (9a) | 2 | 4.3 | 17 |
| | 4 | 5.8 | 15.5 |
| | 6 | 5.9 | 10.5 |
| (9b) | 2 | 2.8 | 9 |
| | 4 | 3.6 | 7.5 |
| | 10 | 9.6 | 7 |
| (9c) | 2 | 3.6 | 9 |
| | 4 | 3.9 | 9.5 |
| | 10 | 1.8 | 6.5 |

Example 10

Two adhesive compositions 10 (a and b) comprising hydroxypropyl methacrylate (HPMA), a solution of hydroxypropyl methacrylate containing 1000 ppm cobalt (in the form of 6% cobalt naphthenate salt in hydrocarbon oil), N-phenyl-2-propyl-3,5-diethyl-1,2-dihydropyridine and a proprietary arylsulphonium salt formulation supplied by General Electric under the designation GE UVE 1014 at the following concentrations were prepared using the procedure described in Example 1.

| Example No. | 10a | 10b |
|---|---|---|
| HPMA | 7.5g | 8.25g |
| 1000ppm cobalt soln. in HPMA | 0.1g | 0.75g |
| N-phenyl-2-propyl-3,5-diethyl-1,2-dihydropyridine | 0.5g | 0.5g |
| GE UVE 1014 | 1.0g | 1.0g |

The adhesive performance of the formulations was tested as outlined in Example 1.

Table 10

| Formulation No. | Open Times/minutes | Tensile Shear Strength N/mm$^2$ |
|---|---|---|
| (10a) | 2 | 0.5 |
| | 4 | 7.7 |
| | 6 | 8.7 |
| (10b) | 2 | 2.9 |
| | 4 | 3.2 |
| | 10 | 4.1 |

Example 11

An adhesive formulation was prepared as in Example 1, comprising the following:

| | |
|---|---|
| HPMA | 10g |
| GE UVE 1014 (a proprietary arylsulphonium salt formulation) | 0.5g |
| 0.3% Cobalt naphthenate | 0.5g |
| N-phenyl-2-propyl-3,5-diethyl-1,2-dihydropyridine | 0.5g |

The 3Kg fixture times were determined for this formulation by exposing the formulation to air in the dark on glass substrates. For a two minute open time the observed fixture time was 20 minutes which is the same result obtained when formulation is exposed to air in ambient light.

Example 12 (Comparative)

An adhesive formulation was prepared using the procedure described in Example 1 by formulating hydroxypropyl methacrylate (8.75g), a solution of hydroxypropyl methacrylate containing 0.1% ferric (acetylacetonate)$_3$ (0.5g), diethyl 1,4-dihydro-2,4,6-trimethyl-3,5 pyridine dicarboxylate (0.5g) and diphenyl iodonium chloride (0.25g). The adhesive performance of the formulation was tested as outlined in Example 1, and is presented in Table 11.

Table 11

| Open Times/minutes | Tensile Shear Strength N/mm$^2$ |
|---|---|
| 2 | 0 |
| 4 | 0 |
| 10 | 0 |

The adhesive formulation failed to give fixtures even after being open to the air for up to 30 minutes.

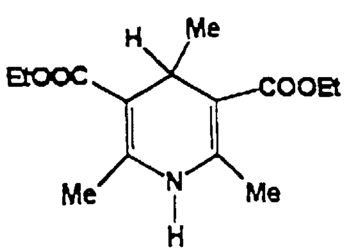

XXII

This 1,4-dihydropyridine derivative having the formula XXII was stabilised by the electron-withdrawing ester groups at the 3- and 5-positions and failed to function as an auto-oxidisable compound.

**Claims**

**1.** A one component polymerisable composition which has been prepared under anaerobic conditions and is storage stable under anaerobic conditions but which polymerizes on exposure to air whether or not the presence of air is maintained, said composition comprising:

(a) at least one free-radically polymerisable monomer; and
(b) an activator system for effecting polymerisation of the free-radically polymerisable monomer, said activator system comprising:

(i) an auto-oxidisable compound which is a dihydropyridine having a general formula selected from II(i)-(v):

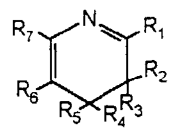

II(i)

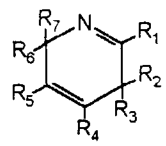

II(ii)

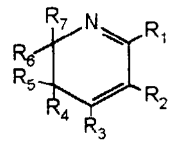

II(iii)

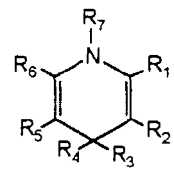

II(iv)

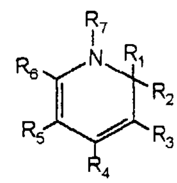

II(v)

where $R_1$ to $R_7$, which may be the same or different, are each hydrogen or a group selected from hydrocarbyl, heterohydrocarbyl, silyl, and substituted derivatives of any of the foregoing, or any two of the groups $R_1$ to $R_7$ may together form a mono- or polycyclic ring structure, which may be a fused ring structure, which in turn may be substituted, provided that none of the groups $R_1$ to $R_7$ is a group which interferes with polymerisation, and that, in the case of 1,4-dihydropyridines of formula II(iv), the groups $R_2$ and $R_5$ at the 3- and 5- positions are not both electron-withdrawing groups;

(ii) an onium salt selected from diazonium, iodonium or sulfonium salts which do not interfere with polymerisation; and

(iii) a soluble ionic salt,

wherein "heterohydrocarbyl" is a hydrocarbyl group. interrupted by one or more oxygen, nitrogen or sulfur atoms, and "substituted derivative" is a hydrocarbyl, heterohydrocarbyl or silyl group substituted with one or more oxygen, nitrogen, sulfur or halogen atoms; and

provided that the composition does not contain a peroxide, or a peroxide precursor which produces peroxide in the absence of air, or any ingredient which is a significant source of radicals in the absence of air.

**2.** A composition as claimed in Claim 1 wherein the onium salt is a stabilized or unstabilized diazonium salt

$$[Ar\ N = N^{+}]_a\ X^{(-)a}$$

corresponding to the general formula III:

wherein a is an integer of 1, 2 or 3 taken so as to equalise the valence charge of the salt and Ar is an aryl or substituted aryl radical (including diazoniumsubstituted aryl radicals), and X is an anion.

**3.** A composition as claimed in Claim 1 wherein the onium salt is an iodonium salt corresponding to the general formula IV:

$$R_8 — I^{+} — R_9$$

$$X^{-}$$

wherein $R_8$ and $R_9$, which may be the same or different, are selected from aryl or substituted aryl groups, and X is a monovalent anion.

**4.** A composition as claimed in Claim 1 wherein the onium salt is a sulphonium salt corresponding to the general formula V:

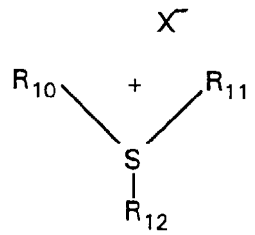

wherein $R_{10}$, $R_{11}$ and $R_{12}$ which may be the same or different are selected from aryl or substituted aryl groups (including fused ring substituted aryl radicals) and X is a monovalent anion.

5. A composition as claimed in any of Claims 2, 3 or 4 wherein the substituted aryl group of the onium salt is substituted with one or more alkyl, alkoxy, alkenyl, cycloalkyl, cycloalkenyl, aryl, chloro, fluoro, bromo, iodo, nitro or, in the case of a sulphonium salt, thiophenoxy groups.

6. A composition as claimed in any of Claims 2, 3, 4 or 5 wherein X is selected from $F^-$, $Cl^-$, $Br^-$, $BF^-_4$, $SbF^-_6$, $PF^-_6$ or $AsF^-_6$.

7. A composition as claimed in Claim 1 wherein the onium salt is 4-methoxy-benzenediazonium hexafluorophosphate or benzenediazonium tetrafluoro-borate.

8. A composition as claimed in Claim 1 wherein the onium salt is diphenyl iodonium chloride, diphenyl iodonium hexafluorophosphate or 4,4' -dioctyl-oxydiphenyl iodonium hexafluorophosphate.

9. A composition as claimed in Claim 1 wherein the onium salt is triphenylsulphonium tetrafluoroborate, diphenyl tolylsulphonium hexafluoro- phosphate, phenylditolyl sulphonium hexafluoroarsenate, or diphenyl-thiophenoxyphenyl sulphonium hexafluoroantimonate.

10. A composition as claimed in any of Claims 1 to 9 wherein the hydrocarbyl groups are selected from straight and branched linear or alicyclic aliphatic groups having from 1 to 20 carbon atoms; alkylene and alkenylene groups forming part of a ring structure having 3 to 30 carbon atoms; and aryl, alkaryl and aralkyl groups having from 6 to 20 carbon atoms.

11. A composition as claimed in any of Claims 1 to 10 wherein the ioinic salt or salts are selected from transition metal salts.

12. A composition as claimed in any of Claims 1 to 11 wherein the transition metal salt or salts are selected from salts of cobalt, iron, maganese and vanadium.

13. A composition as claimed in any of Claims 1 to 12 wherein the soluble ionic salt is selected from the group consisting of cobalt naphthenate ferric (acetylacetonate)3 and iron (III) naphthenate.

14. A composition as claimed in any of Claims 1 to 13 wherein the free-radically polymerisable monomer is selected from the group consisting of acrylates, methacrylates, styrene, maleate esters, fumarate esters, unsaturated polyester resins, alkyl resins, thiol-ene compositions and acrylated, methacrylated or vinyl terminated resins.

15. A composition as claimed in any of Claims 1 to 14 comprising at least 10% by weight of the free-radically polymerisable monomer, 0.1 to 20% by weight of the auto-oxidisable compound, 0.1 to 20% by weight of the onium salt, 0.0001 to 0.1% by weight of the ionic salt and the remainder being thickeners, fillers, pigments, reducing agents and/or stabilisers, the total constituents adding up to 100%.

16. A composition as claimed in claim 15 which contains filler or thickener and wherein the free-radically polymerisable monomer is present in an amount of 10 to 60% by weight.

## Patentansprüche

**1.** Polymerisierbare Einkomponentenzusammensetzung, die unter anaeroben Bedingungen hergestellt worden ist und unter anaeroben Bedingungen lagerstabil ist, die jedoch bei der Einwirkung von Luft polymerisiert, gleichgültig ob die Gegenwart von Luft aufrechterhalten wird oder nicht, wobei die genannte zusammensetzung umfaßt:

(a) wenigstens ein radikalisch polymerisierbares Monomer und
(b) ein Aktivatorsystem, um die Polymerisation des radikalisch polymerisierbaren Monomers zu bewirken, wobei das Aktivatorsystem umfaßt:

(i) eine autoxidierbare verbindung, welche ein Dihydropyridin ist mit einer allgemeinen Formel, ausgewählt aus II(i)-(v):

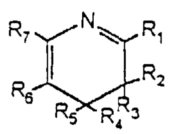
II(i)

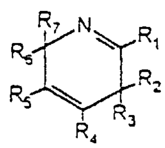
II(ii)

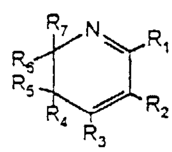
II(iii)

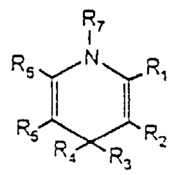
II(iv)

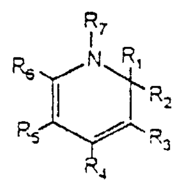
II(v) ,

worin $R_1$ bis $R_7$, die gleich oder verschieden sein können, jeweils Wasserstoff oder eine Gruppe, ausgewählt aus Hydrocarbyl, Heterohydrocarbyl, Silyl und substituierten Derivaten von irgendwelchen der obigen Verbindungen, sind, oder zwei beliebige der Gruppen $R_1$ bis $R_7$ zusammen eine mono- oder polycyclische Ringstruktur bilden können, welche eine kondensierte Ringstruktur sein kann, die wiederum substituiert sein kann, mit der Maßgabe, daß keine der Gruppen $R_1$ bis $R_7$ eine Gruppe ist, welche die Polymerisation stört, und daß, im Falle von 1,4-Dihydropyridinen der Formel II(iv), die Gruppen $R_2$ und $R_5$ in den 3- und 5-Stellungen nicht beide elektronenziehende Gruppen sind,
(ii) ein Oniumsalz, ausgewählt aus Diazonium-, Iodoniumoder Sulfoniumsalzen, welche die Polymerisation nicht stören, und
(iii) ein lösliches ionisches Salz,

wobei "Heterohydrocarbyl" eine Hydrocarbylgruppe ist, die durch ein oder mehrere Sauerstoff-, Stickstoff- oder Schwefelatome unterbrochen ist, und "substituiertes Derivat" eine Hydrocarbyl-, Heterohydrocarbyl- oder Silylgruppe ist, die mit einem oder mehreren Sauerstoff-, Stickstoff-, Schwefel- oder Halogenatomen substituiert ist, und mit der Maßgabe, daß die zusammensetzung kein Peroxid oder keinen Peroxidvorläufer, der in Abwesenheit von Luft Peroxid erzeugt, oder keinen anderen Bestandteil, der in Abwesenheit von Luft eine bedeutende Radikalquelle darstellt, enthält.

**2.** Zusammensetzung nach Anspruch 1, worin das Oniumsalz ein stabilisiertes oder unstabilisiertes Diazoniumsalz ist, das der allgemeinen Formel III entspricht:

$$[Ar\,N = N^{+}]_a\ X^{(-)a}\ ,$$

worin a eine ganze Zahl von 1, 2 oder 3 ist, die derart ist, um die Valenzladung des Salzes auszugleichen, und Ar ein Aryl- oder substituierter Arylrest (einschließlich diazoniumsubstituierte Arylreste) ist, und X ein Anion ist.

**3.** Zusammensetzung nach Anspruch 1, worin das Oniumsalz ein Iodoniumsalz ist, das der allgemeinen Formel IV entspricht:

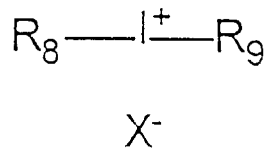
,

worin $R_8$ und $R_9$, die gleich oder verschieden sein können, ausgewählt sind aus Aryl- oder substituierten Arylgruppen, und X ein monova- lentes Anion ist.

**4.** Zusammensetzung nach Anspruch 1, worin das Oniumsalz ein Sulfoniumsalz ist, das der allgemeinen Formel V entspricht:

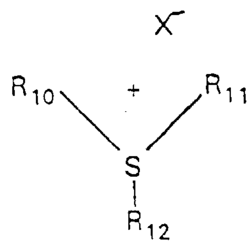
,

worin $R_{10}$, $R_{11}$ und $R_{12}$, die gleich oder verschieden sein können, ausgewählt sind aus Aryl- oder substituierten Arylgruppen (einschließlich mit kondensierten Ringen substituierten Arylresten), und X ein monovalentes Anion ist.

**5.** Zusammensetzung nach irgendeinem der Ansprüche 2, 3 oder 4, worin die substituierte Arylgruppe des Oniumsalzes mit einer oder mehreren Alkyl-, Alkoxy-, Alkenyl-, Cycloalkyl-, Cycloalkenyl-, Aryl-, Chlor-, Fluor-, Brom-, Iod-, Nitro- oder, im Falle eines Sulfoniumsalzes, Thiophenoxygruppen substituiert sein kann.

**6.** Zusammensetzung nach irgendeinem der Ansprüche 2, 3, 4 oder 5, worin X ausgewählt ist aus $F^-$, $Cl^-$, $Br^-$, $BF^-_4$, $SbF^-_6$, $PF^-_6$ oder $AsF^-_6$.

**7.** Zusammensetzung nach Anspruch 1, worin das Oniumsalz 4-Methoxybenzoldiazoniumhexafluorphosphat oder Benzoldiazoniumtetrafluorborat ist.

**8.** Zusammensetzung nach Anspruch 1, worin das Oniumsalz Diphenyliodoniumchlorid, Diphenyliodoniumhexafluorphosphat oder 4,4'-Dioctyloxydiphenyliodoniumhexafluorphosphat ist.

**9.** Zusammensetzung nach Anspruch 1, worin das Oniumsalz Triphenylsulfoniumtetrafluorborat, Diphenyltolylsulfoniumhexafluorphosphat, Phenylditolylsulfoniumhexafluorarsenat oder Diphenylthiophenoxyphenylsulfoniumhexafluorantimonat ist.

**10.** Zusammensetzung nach irgendeinem der Ansprüche 1 bis 9, worin die Hydrocarbylgruppen ausgewählt sind aus geraden oder verzweigten linearen oder alicyclischen aliphatischen Gruppen mit 1 bis 20 Kohlenstoffatomen, Alkylen- und Alkenylengruppen, die Teil einer Ringstruktur bilden mit 3 bis 30 Kohlenstoffatomen, und Aryl-, Alkaryl- und Aralkylgruppen mit 6 bis 20 Kohlenstoffatomen.

**11.** Zusammensetzung nach irgendeinem der Ansprüche 1 bis 10, worin das ionische Salz oder die ionischen Salze ausgewählt ist/sind aus Übergangsmetallsalzen.

**12.** Zusammensetzung nach irgendeinem der Ansprüche 1 bis 11, worin das Übergangsmetallsalz oder die Übergangsmetallsalze ausgewählt ist/sind aus cobalt-, Eisen-, Mangan- und Vanadiumsalzen.

**13.** Zusammensetzung nach irgendeinem der Ansprüche 1 bis 12, worin das lösliche ionische Salz ausgewählt ist aus der Gruppe, bestehend aus Cobaltnaphthenat, Eisen(acetylacetonat)$_3$ und Eisen(III)naphthenat.

**14.** Zusammensetzung nach irgendeinem der Ansprüche 1 bis 13, worin das radikalisch polymerisierbare Monomer ausgewählt ist aus der Gruppe, bestehend aus Acrylaten, Methacrylaten, Styrol, Maleinsäureestern, Fumarsäureestern, ungesättigten Polyesterharzen, Alkylharzenn, Thiol-En-Zusammensetzungen und acrylierten, methacrylierten oder vinylterminierten Harzen.

**15.** Zusammensetzung nach irgendeinem der Ansprüche 1 bis 14, umfassend wenigstens 10 Gew.-% des radikalisch polymerisierbaren Monomers, 0,1 bis 20 Gew.-% der autoxidierbaren Verbindung, 0,1 bis 20 Gew.-% des Oniumsalzes, 0,0001 bis 0,1 Gew.-% des ionischen Salzes und als Rest Verdickungsmittel, Füllstoffe, Pigmente, Reduktionsmittel und/oder Stabilisierungsmittel, wobei sich die Bestandteile insgesamt auf 100% addieren.

**16.** Zusammensetzung nach Anspruch 15, die einen Füllstoff oder ein Verdickungsmittel enthält, und worin das radikalisch polymerisierbare Monomer in einer Menge von 10 bis 60 Gew.-% vorliegt.

## Revendications

**1.** Composition polymérisable à un seul composant qui a été préparée dans des conditions anaérobies et qui est stable à la conservation dans des conditions anaérobies, mais qui polymérise par exposition à de l'air, que l'on maintienne ou non la présence d'air, ladite composition comprenant :

(a) au moins un monomère polymérisable par radicaux libres et
(b) un système activateur pour effectuer la polymérisation du monomère polymérisable par radicaux libres, ledit système activateur comprenant:

(i) un composé auto-oxydable qui est une dihydropyridine répondant à l'une des formules générales choisies parmi II(i)-(v):

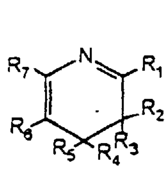
II(i)

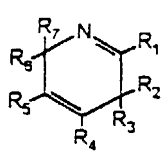
II(ii)

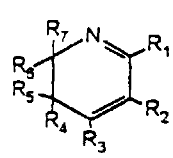
II(iii)

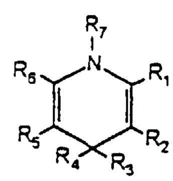
II(iv)

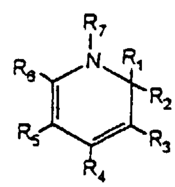
II(v)

dans lesquelles les symboles $R_1$ à $R_7$, qui peuvent avoir des significations identiques ou différentes, représentent chacun un atome d'hydrogène ou un radical choisi parmi les groupes hydrocarbyle, hétérohydrocarbyle, silyle et les dérivés substitués de n'importe lesquels des groupes précédents, ou bien deux quelconques des symboles $R_1$ à $R_7$ peuvent former ensemble une structure à noyau monocyclique ou polycyclique, qui peut être une structure à noyaux condensés, qui, à leur tour, peuvent être substitués, avec la condition qu'aucun des symboles $R_1$ à $R_7$ désigne un radical qui gêne la polymérisation et que, dans le cas de 1,4-dihydropyridines de la formule II(iv), les symboles $R_2$ et $R_5$ aux positions 3 et 5 ne représentent pas tous deux des radicaux soustrayant des électrons,
(iii) un sel d'onium choisi parmi les sels de diazonium, d'iodonium ou de sulfonium, qui ne gênent pas la polymérisation et
(iii) un sel ionique soluble,

où le terme "hétérohydrocarbyle" désigne un radical hydrocarbyle interrompu par un ou plusieurs atomes d'oxygène, d'azote ou de soufre et l'expression "dérivé substitué" désigne un radical hydrocarbyle, hétérohydrocarbyle, ou silyle, substitué par un ou plusieurs atomes d'oxygène, d'azote, de soufre ou d'halogènes et avec la condition que la composition ne contienne pas de peroxyde, ou de précurseur de peroxyde qui produit du peroxyde en l'absence d'air, ou n'importe quel ingrédient qui constitue une source importante de radicaux en l'absence d'air.

**2.** Composition suivant la revendication 1, caractérisée en ce que le sel d'onium est un sel de diazonium, stabilisé

ou non stabilisé,

$$[A r N = N^{+}]_{a} X^{(-)a}$$

correspondant à la formule générale III:
dans laquelle a représente un nombre entier égal 1, 2 ou 3, compté de manière à égaliser la charge valentielle du sel et Ar représente un radical aryle ou aryle substitué (y compris des radicaux aryle substitués par du diazonium) et X représente un anion.

**3.** Composition suivant la revendication 1, caractérisée en ce que le sel d'onium est un sel d'iodonium correspondant à la formule générale IV qui suit :

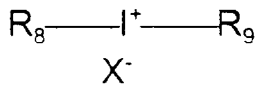

dans laquelle $R_8$ et $R_9$, qui peuvent avoir des significations identiques ou différentes, sont choisis parmi les radicaux aryle et aryle substitué et X représente un anion monovalent.

**4.** Composition suivant la revendication 1, caractérisée en ce que le sel d'onium est un sel de sulfonium correspondant à la formule générale V:

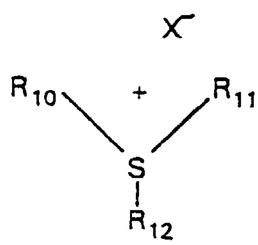

dans laquelle $R_{10}$, $R_{11}$ et $R_{12}$, qui peuvent être identiques ou différents, sont choisis parmi les radicaux aryle et aryle substitué (y compris des radicaux aryle substitués à noyaux condensés) et X représente un anion monovalent.

**5.** Composition suivant l'une quelconque des revendications 2, 3 et 4, caractérisée en ce que le radical aryle substitué du sel d'onium est substitué par un ou plusieurs radicaux alkyle, alcoxy, alcényle, cycloalkyle, cycloalcényle, aryle, des atomes de chlore, de fluor, de brome, d'iode, des radicaux nitro ou, dans le cas d'un sel de sulfonium, des radicaux thiophénoxy.

**6.** Composition suivant l'une quelconque des revendications 2, 3, 4 et 5, caractérisée en ce que X est choisi parmi $F^-$, $Cl^-$, $Br^-$, $BF^-_4$, $SbF^-_6$, $PF^-_6$, et $AsF^-_6$.

**7.** Composition suivant la revendication 1, caractérisée en ce que le sel d'onium est l'hexafluorophosphate de 4-méthoxy-benzènediazonium, ou le tétrafluoroborate de benzènediazonium.

**8.** Composition suivant la revendication 1, caractérisée en ce que le sel d'onium est le chlorure de diphényliodonium, l'hexafluorophosphate d'iodonium, ou l'hexafluorophosphate de 4',4-dioctyl-oxydiphényliodonium.

**9.** Composition suivant la revendication 1, caractérisée en ce que le sel d'onium est le tétrafluoroborate de triphénylsulfonium, l'hexafluorophosphate de diphényltolylsulfonium, l'hexafluoroarséniate de phénylditolylsulfonium ou l'hexafluoroantimonate de diphénylthiophénoxyphényl-sulfonium.

**10.** Composition suivant l'une quelconque des revendications 1 à 9, caractérisée en ce que les radicaux hydrocarbyle

sont choisis parmi des radicaux à chaîne droite et à chaîne ramifiée, linéaires ou alicycliques, aliphatiques, possédant de 1 à 20 atomes de carbone, des radicaux alkylène et alcénylène faisant partie d'une structure cyclique possédant de 3 à 30 atomes de carbone et des radicaux aryle, alcaryle et aralkyle possédant de 6 à 20 atomes de carbone.

**11.** Composition suivant l'une quelconque des revendications 1 à 10, caractérisée en ce que le ou les sels ioniques sont choisis parmi des sels de métaux de transition.

**12.** Composition suivant l'une quelconque des revendications 1 à 11, caractérisée en ce que le ou les sels de métaux de transition sont choisis parmi les sels de cobalt, de fer, de manganèse et de vanadium.

**13.** Composition suivant l'une quelconque des revendications 1 à 12, caractérisée en ce que le sel ionique soluble est choisi dans le groupe formé par le naphténate de cobalt, l'$(\text{acétylacétonate})_3$ ferrique et le naphténate de fer (III).

**14.** Composition suivant l'une quelconque des revendications 1 à 13, caractérisée en ce que le monomère polymérisable par radicaux libres est choisi dans le groupe formé par les acrylates, les méthacrylates, le styrène, les esters du type maléate, les esters du type fumarate, les résines de polyester insaturées, les alkylrésines, les compositions de thiolène et les résines à terminaison acrylée, méthacrylée, ou vinylique.

**15.** Composition suivant l'une quelconque des revendications 1 à 14, comprenant au moins 20% en poids de monomère polymérisable par radicaux libres, 0,1 à 20% en poids du composé auto-oxydable, 0,1 à 20% en poids du sel d'onium, 0,0001 à 0,1% en poids du sel ionique et le reste étant constitué d'épaississants, de charges, de pigments, d'agents réducteurs et/ou de stabilisateurs, les constituants totaux s'additionnant pour faire 100%.

**16.** Composition suivant la revendication 15, caractérisée en ce qu'elle contient une charge ou un épaississant et en ce que le polymère polymérisable par radicaux libres y est présent en une proportion de 10 à 60% en poids.